# EUROPÄISCHE PATENTSCHRIFT

(11) **EP 2 516 116 B1**
(45) Veröffentlichungstag und Bekanntmachung des Hinweises auf die Patenterteilung: **27.11.2013**
(21) Anmeldenummer: 09803758.3
(22) Anmeldetag: 21.12.2009
(51) Int. Cl.: B25J 15/00, B21D 43/10

(54) **ROBOTER MIT ZUSATZARM**
ROBOT WITH ADDITIONAL ARM
MANIPULATEUR AVEC BRAS ADDITIONEL

(43) Veröffentlichungstag der Anmeldung: 31.10.2012
(73) Patentinhaber: Strothmann Machines & Handling GmbH, 33758 Schloß Holte-Stukenbrock (DE)
(72) Erfinder: NAUMANN, Bernd, 99100 Erfurt-Schaderode (DE); WESSLING-SCHÄFERS, Markus, 59590 Geseke (DE)
(74) Vertreter: Ter Meer Steinmeister & Partner
(86) Internationale Anmeldenummer: PCT/EP2009/067682
(87) Internationale Veröffentlichungsnummer: WO 2011/076249

(56) Entgegenhaltungen:
- EP-A1- 0 012 741
- DE-A1- 3 804 572
- DE-U1- 20 306 257
- GB-A- 781 465
- GB-A- 2 254 172
- US-A- 5 274 213

## Beschreibung

Die Erfindung betrifft einen Roboter mit einem Bewegungsmechanismus zum Umsetzen von Pressteilen, insbesondere zwischen zwei aufeinanderfolgenden Pressen einer Pressenstraße, die die Durchführung von dreidimensionalen Bewegungen auf dem Weg zwischen den Pressen gestattet.

Roboter sind in großer Zahl bekannt. Bei einigen Robotern besteht der schwenkbare Roboterarm wenigstens aus zwei Gliedern, die um eine waagerechte Achse in bezug aufeinander schwenkbar verbunden sind. Durch diese Schwenk- oder Knickbewegung kann der Abstand vom äußeren Ende des Roboterarms zum Fuß verkürzt und verlängert werden. Im übrigen kann die Höhe des äußeren Endes des Roboterarms durch geeignete Schwenkbewegung der beiden Armteile um ihre waagerechten Schwenkachsen verändert werden.

Beim Umsetzen von Pressteilen zwischen zwei Pressen muß berücksichtigt werden, dass die Platzverhältnisse zwischen den Pressen beengt sind und zudem der zwischen dem Oberwerkzeug und dem Unterwerkzeug einer Presse zur Verfügung stehende Raum sehr niedrig sein kann. Es ist daher häufig problematisch, relativ große Pressteile von einer Presse in die nächste zu bewegen. Werden hierzu Roboter der oben genannten Art verwendet, die einknickbare Arme aufweisen, sind sowohl die Ständer der benachbarten Pressen als auch der Fuß des Roboters selbst hinderlich, zumal der Roboterarm während der Schwenkbewegung mit seinem äußeren Ende eine Kreisbogenbahn beschreibt und sich den Pressenständern annähert.

Darüber hinaus besteht ein bauartbedingtes Problem derartiger Roboter darin, das der Bewegungsablauf beim Umsetzen der Pressteile verhältnismäßig zeitaufwändig und energieintensiv ist.

Neben den genannten Robotern mit Schwenkarm sind auch relativ einfach aufgebaute Linearroboter bekannt, die zwischen den Pressen eine relativ einfache lineare Bewegung ausführen können. Die bisher bekannten Linearroboter weisen jedoch wenige Freiheitsgrade in der Bewegung der Pressteile auf und sind daher für den hier vorliegenden Einsatzzweck in einer Pressenstraße eher ungeeignet. Sowohl Schwenkarm-Roboter als auch Linearroboter weisen bisher das Problem auf, dass die Werkzeugaufhängung am Ende des Roboterarms eine Bauhöhe aufweist, die das Einführen von Pressteilen in einen relativ niedrigen Raum innerhalb der Presse erschwert.

Aus der DE-A-3804572 ist ein Roboter zum Umsetzen von Pressteilen bekannt, der einen horizontalen Längsträger als Bewegungsmechanismus umfasst, an welchem ein senkrechter Träger horizontal verfahrbar ist, an dem ein horizontaler Zusatzaren angebracht ist, der um die senkrechte Achse des Trägers schwenkbar ist und an dessen äußeren Ende eine Werkzeugaufhängung vorgesehen ist, die eine die Werkzeugaufnahme umfasst und im mehrere Achsen dreh- bzw. schwenkbar ist.

Der Erfindung liegt daher die Aufgabe zugrunde, einen Roboter zum Umsetzen von Pressteilen zu schaffen, der eine Bewegung des Pressteils mit möglichst vielen Freiheitsgraden mit geringem Zeit- und Energieaufwand ermöglicht. Insbesondere soll das Umsetzen des Pressteils auf beengtem Raum zwischen den Pressen und ein Einführen des Endes des Roboterarms in einem sehr niedrigen Pressenraum zwischen den Presswerkzeugen ermöglicht werden.

Diese Aufgabe wird erfindungsgemäß durch einen Roboter mit den Merkmalen des Anspruchs 1 gelöst.

Erfindungsgemäß ist an dem Bewegungsmechanismus des Robotors ein Zusatzarm angebracht, der mit dem Bewegungsmechanismus über einen Träger verbunden ist, der eine senkrechte Achse aufweist und der eine Schwenkung des Zusatzarms um diese senkrechte Achse des Trägers sowie eine Längsverschiebung des Zusatzarms bezüglich des Trägers gestattet. Diese Schwenkbarkeit in Verbindung mit der Ausfahrbarkeit des Zusatzarms gegenüber dem eigentlichen Roboterarm gestattet eine hohe Beweglichkeit. Insbesondere kann der Abstand zwischen der Werkzeugaufnahme und der Basis des Roboters durch das lineare Ein- und Ausfahren in einfacher Weise verkürzt oder verlängert werden, ohne dass der Roboterarm eingeknickt oder auf sonstige Weise selbst bewegt werden muß.

Am äußeren Ende des Zusatzarms ist eine Werkzeugaufhängung vorgesehen, die um eine horizontale erste Achse und um eine zweite Achse schwenkbar ist, die zur ersten Achse senkrecht steht. Damit ist die Werkzeugaufhängung frei im Raum bewegbar, so dass sich eine relativ freie Positionierbarkeit des Pressteils ergibt, das am Werkzeug aufgehängt ist. Die eigentliche Werkzeugaufnahme der Werkzeugaufhängung ist zusätzlich um eine dritte Achse drehbar, die zu der zweiten Achse senkrecht steht. Hierdurch ergeben sich noch zusätzliche Bewegungsmöglichkeiten des Werkzeugs an der Werkzeugaufhängung.

Insbesondere ist es möglich, die zweite Achse der Werkzeugaufhängung durch Schwenken um die horizontale erste Achse in eine horizontale Stellung zu kippen und die Werkzeugaufnahme durch Schwenken um die zweite Achse ebenfalls in die horizontale Ebene zu stellen, so dass alle drei Achsen in der gleichen horizontalen Ebene liegen. In dieser Stellung weist das Ende des Zusatzarms einschließlich der Werkzeugaufhängung mit der Werkzeugaufnahme eine relativ geringe Bauhöhe auf und ermöglicht somit ein Einführen des Pressteils in einen flachen Pressenraum. Dieses Einführen kann im wesentlichen durch ein lineares Ausfahren des Zusatzarms an dessen Träger erfolgen.

Während die erfindungsgemäße Konstruktion beim Entnehmen bzw. beim Einlegen des Pressteils in die Presse Vorteile bezüglich der Bauhöhe bietet, kann das Pressteil durch die große Zahl der vorhandenen Freiheitsgrade im Raum zwischen den Pressen frei gedreht und gekippt werden, zusätzlich zu einer Linearbewegung durch den Zusatzarm auf die Roboterbasis zu oder von dieser weg. Die entsprechenden Bewegungsabläufe können mit verringertem Zeit- und Energieaufwand durchgeführt werden.

Vorzugsweise ist die Werkzeugaufhängung in einem Schwenklager zur Drehung um die zweite Achse gelagert, welches Schwenklager um die erste Achse schwenkbar am Ende des Zusatzarmes gehalten wird.

Die Werkzeugaufnahme ist vorzugsweise als stabförmiger Halter ausgebildet, dessen Stabachse die dritte Achse bildet.

Gemäß einer bevorzugten Ausführungsform der vorliegenden Erfindung umfaßt das Ende des Zusatzarms ein Gelenkstück, das um eine senkrechte Achse schwenkbar ist und in dessen Ende die dritte Achse gelagert ist.

Durch dieses Gelenkstück kann die Werkzeugaufhängung auch in einer Stellung zum Einfahren in den Pressenraum, in welcher die erste, zweite und dritte Achse in einer gemeinsamen horizontalen Ebene liegen, schwenkbar am Ende des Zusatzarms gehalten werden. Dieses Verschwenken in der horizontalen Ebene um die Achse des Gelenkstücks kann einen leichten Winkelversatz der Stellung des Zusatzarms bezüglich der Einführungsrichtung ermöglichen.

Das Gelenkstück ist vorzugsweise gabelförmig ausgebildet und umgreift das Schwenklager.

Gemäß einer weiteren bevorzugten Ausführungsform umfaßt der Bewegungsmechanismus einen horizontalen Längsträger, an welchem der Träger entlang der Länge des Längsträgers und in vertikaler Richtung verfahrbar gehalten wird.

Der Längsträger dient somit dazu, eine längere Wegstrecke im Zwischenraum zwischen den beiden zu bedienenden Pressen zu überbrücken. Zwischen den Enden des horizontalen Längsträgers wird der Träger für den Zusatzarm hin- und hergefahren und kann in der jeweiligen Endstellung die oben beschriebenen Bewegungsabläufe zum Einführen oder Entnehmen von Pressteilen ausführen.

Gemäß einer weiteren bevorzugten Ausführungsform umfaßt der Bewegungsmechanismus einen um eine senkrechte Achse schwenkbaren mehrteiligen und einknickbaren Arm, wobei der Träger am Ende dieses Roboterarms angebracht ist.

Durch den Zusatzarm werden die oben beschriebenen Nachteile des einknickbaren Roboterarms zumindest teilweise kompensiert, da durch den flach gehaltenen Zusatzarm die Gefahr einer Kollision der eingeknickten Teile des Roboterarms mit den Stützen der Presse vermindert wird.

Bevorzugt sind zur Durchführung der Schwenkung um die erste Achse, die zweite Achse und/oder die dritte Achse einer oder mehrere Motoren vorgesehen.

Im folgenden wird ein bevorzugtes Ausführungsbeispiel der Erfindung anhand der Zeichnung näher erläutert.
- Fig. 1 bis 3: zeigen ein Ausführungsbeispiel des erfindungsgemäßen Roboters in einer Pressenstraße;
- Fig. 4: ist eine perspektivische Detailansicht des Roboters aus den Fig. 1 bis 3;
- Fig. 5A und 5B: sind Seitenansichten der dargestellten Ausführungsform des erfindungsgemäßen Roboters in zwei verschiedenen Stellungen der Werkzeugaufnahme und
- Fig. 6 und 7: sind eine Seitenansicht und eine perspektivische Ansicht des erfindungsgemäßen Roboters in einer weiteren Stellung der Werkzeugaufnahme.

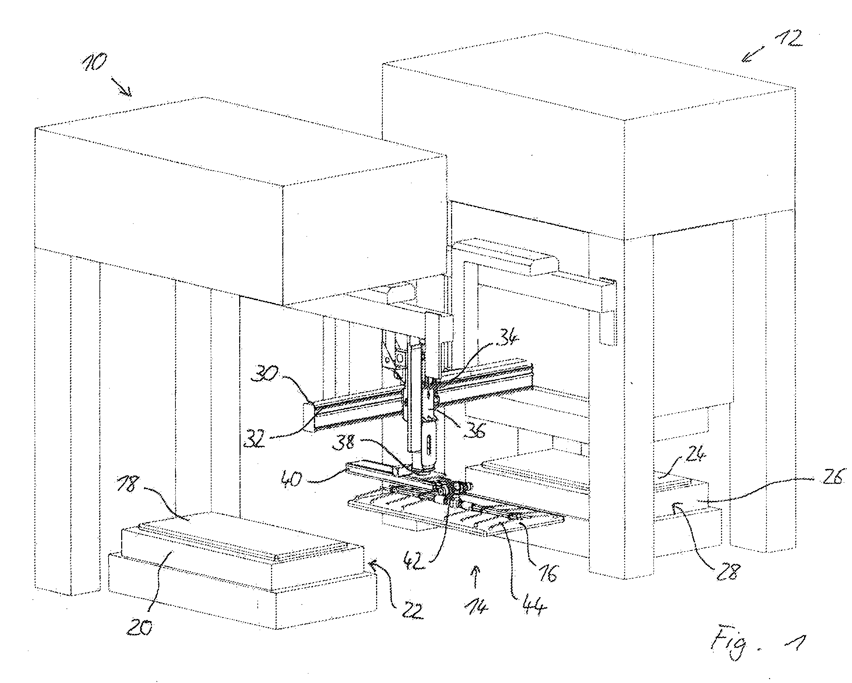

In Fig. 1 sind schematisch zwei aufeinanderfolgende Pressen 10,12 einer Pressenstraße dargestellt. Zwischen den Pressen ist ein Roboter 14 erfindungsgemäßer Bauart zum Transport eines Pressteils 16 von der ersten Presse 10 in die nachfolgende zweite Presse 12 angeordnet. Die Presse 10 umfaßt demnach eine Entnahmeposition 18 auf der unteren Hälfte 20 eines Presswerkzeugs 22, während die zweite Presse 12 eine Ablageposition 24 auf der unteren Hälfte 26 ihres Presswerkzeugs 28 umfaßt. Der Roboter 14 ist dazu vorgesehen, das Pressteil 16 nach dem Pressvorgang in der ersten Presse 10 von der Entnahmeposition 18 zu entnehmen und in die Ablageposition 24 der zweiten Presse 12 zu transportieren.

Der Roboter 14 umfaßt zu diesem Zweck einen horizontalen Längsträger 30, der sich in dem Raum zwischen den beiden Pressen 10,12 erstreckt. An dem Längsträger 30 befinden sich Schienen 32, auf denen ein Horizontalschlitten 34 zwischen den Enden des Längsträgers 30 verfahrbar ist. An dem Horizontalschlitten 34 ist ein vertikal verfahrbarer Vertikalschlitten 36 angebracht, der an seinem unteren Ende einen Träger 38 aufweist. Der Träger 38 trägt wiederum einen Zusatzarm 40, der einerseits gegenüber dem Träger 38 in Längsrichtung des Zusatzarms 40 verschiebbar ist und andererseits um die senkrechte Achse des Trägers 38 schwenkbar ist.

Am Ende des Zusatzarms 40 ist auf unten noch näher beschriebene Weise eine Werkzeugaufhängung 42 vorgesehen, die um verschiedene Achsen kippbar und schwenkbar ist. Die Werkzeugaufhängung 42 trägt ein Werkzeug 44 zur Aufnahme des Pressteils 16. Aufgrund des Bewegungsmechanismus, der durch den horizontalen Längsträger 30, den Horizontalschlitten 34 und den Vertikalschlitten 36 gebildet wird, kann die Werkzeugaufhängung 42 praktisch jeden beliebigen Punkt im Raum zwischen den Pressen 10,12 zwischen der Entnahmeposition 18 und der Auflageposition 24 erreichen.

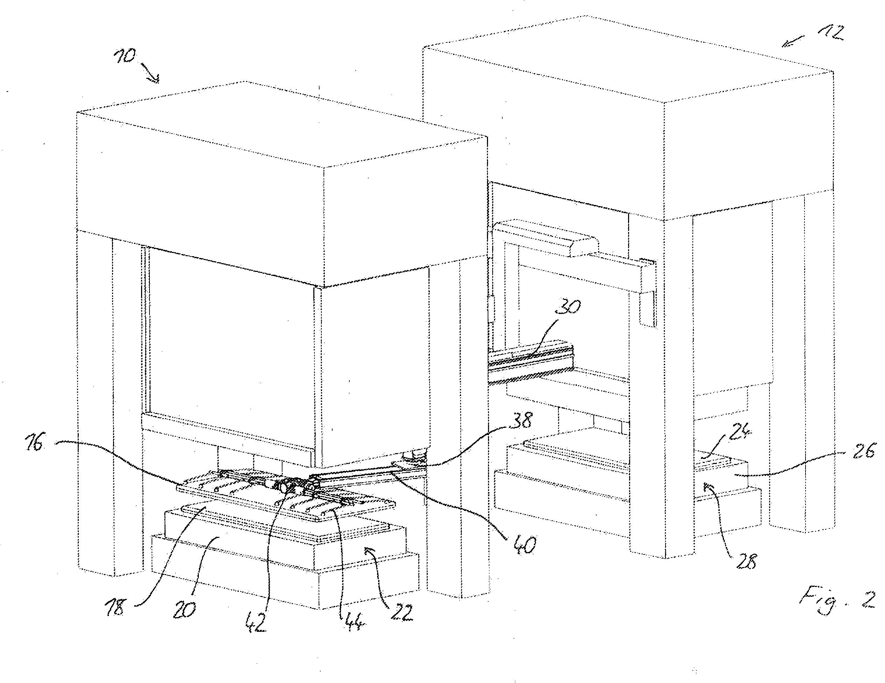

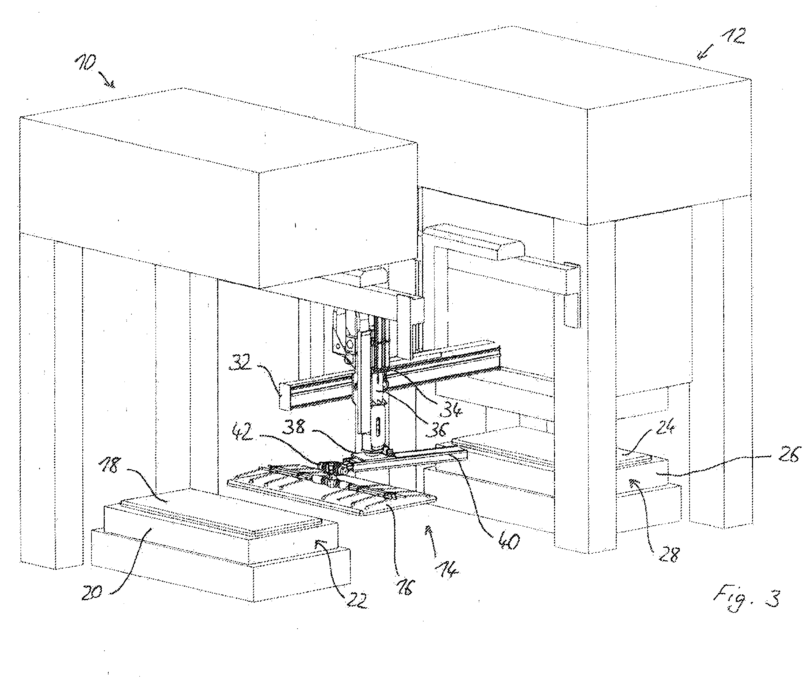

Während in Fig. 1 eine Zwischenposition dargestellt ist, in welcher der Zusatzarm 40 senkrecht zum Längsträger 30 steht, stellt Fig. 2 eine extrem ausgefahrene Stellung des Zusatzarms 40 dar, in welcher das Pressteil 16 aus der ersten Presse 10 entnommen wird, während Fig. 3 eine Position zwischen der Stellung aus Fig. 2 und derjenigen aus Fig. 1 darstellt, in welcher der Zusatzarm 40 teilweise in Richtung Träger 38 eingefahren ist, jedoch noch weitgehend in Längsrichtung mit dem Längsträger 30 ausgerichtet ist, bevor er in die Stellung in Fig. 1 verschwenkt wird. Im weiteren Bewegungsablauf zum Einführen des Pressteils 16 in die nachfolgende Presse 12 wird der Zusatzarm 40 weiter im gleichen Drehsinn geschwenkt und bezüglich des Trägers 38 ausgefahren, so dass die Ablageposition 24 für das Pressteil 16 erreicht wird.

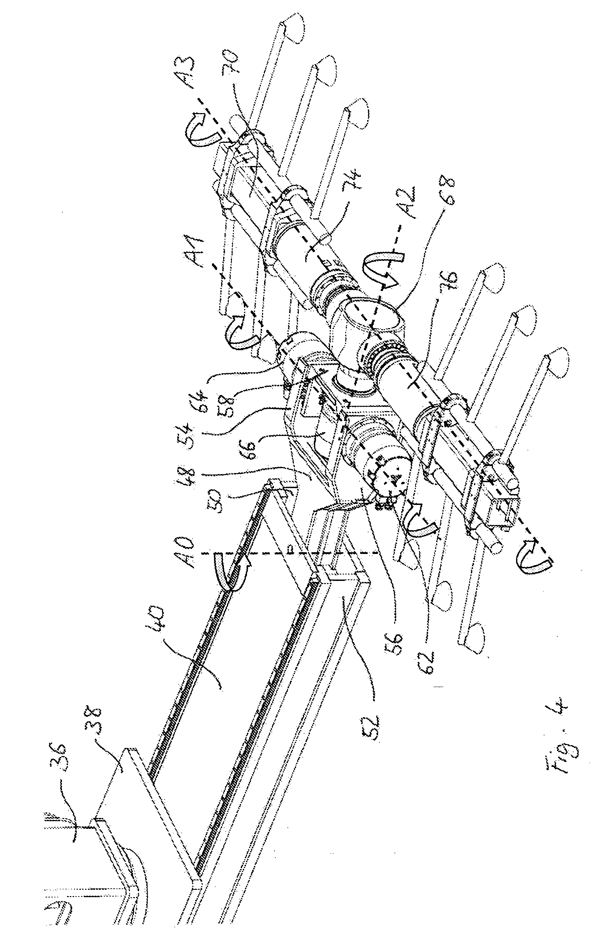

In Fig. 2 ist ersichtlich, dass die Werkzeugaufhängung 42 am Ende des Zusatzarms 40 im Pressenraum der ersten Presse 10 zwischen den Hälften des Presswerkzeugs 22 eine andere Stellung einnimmt als in den Fig. 1 und 3. Diese Veränderung der Stellung der Werkzeugaufnahme wird durch eine Konstruktion ermöglicht, die im Detail im Zusammenhang mit Fig. 4 beschrieben werden soll.

Fig. 4 zeigt einen ausgefahrenen Teil des Zusatzarms 40, der am Träger 38 gehalten wird. Das Ende 46 des Zusatzarms 40 trägt ein Gelenkstück 48, das gabelförmig ausgebildet ist und gegenüber dem festen Ende 46 des Zusatzarms 40 um eine senkrechte Achse A0 schwenkbar ist. Der Schwenkbereich des Gelenkstücks 48 wird durch seitliche Anschläge 50,52 begrenzt, die durch senkrechte Seitenwände des Hohlprofils gebildet werden, die den Zusatzarm 40 bilden. Zum Verschwenken des Gelenkstücks 48 ist ein nicht näher dargestellter Motorantrieb vorgesehen.

Das gabelförmige Gelenkstück 48 weist an seinem freien Ende zwei parallele flache Schenkel 54,56 auf. Zwischen den Schenkeln 54,56 wird ein Schwenklager 58 zur drehbaren Lagerung der Werkzeugaufhängung 42 eingefaßt. Das Lager 58 selbst ist schwenkbar zwischen den Schenkeln 54,56 des Gelenkstücks 48 gehalten und kann um eine horizontale Achse A1 geschwenkt werden, die zu der Rotationsachse A2 der Werkzeughängung 42 senkrecht steht. Diese Schwenkachse A1 des Lagers 58 soll im folgenden als erste Achse A1 bezeichnet werden, während die Rotationsachse A2 der Werkzeugaufhängung 42 als zweite Achse bezeichnet werden soll. Das Schwenken des Lagers 58 zwischen den Schenkeln 54,56 wird durch Motorantriebe 62,64 erreicht, die seitlich außen an den Schenkeln 54,56 angebracht sind. Zum Drehen der Werkzeugaufhängung 42 dient ein weiterer Motorantrieb 66 auf der zweiten Achse A2 zwischen den Schenkeln 54,56.

Die Werkzeugaufhängung 42 umfaßt einen Zapfen 68, der mit einem Ende im Lager 58 einliegt. Vom verbleibenden freien Ende des Zapfens 68 gehen seitlich stabförmige Werkzeugaufnahmen 70,72 aus, deren Stabachsen auf einer gemeinsamen dritten Achse A3 liegen, die senkrecht zur zweiten Achse A2 steht. Die Werkzeugaufnahmen 70,72 sind um die dritte Achse A3 drehbar am Zapfen 68 angebracht. Die Drehung erfolgt jeweils über einen Rotationsantrieb 74,76, durch welchen die jeweilige Werkzeugaufnahmen 70,72 gegenüber dem Zapfen 68 gedreht werden können. Jede der Werkzeugaufnahmen 70,72 trägt einen Teil eines Werkzeugs zum Anheben des Pressteils 16.

Während die Werkzeugaufhängung 42 selbst um die erste Achse A1 und die zweite Achse A2 gedreht werden kann, so dass die stabförmigen Werkzeugaufnahmen 70,72 eine beliebige Stellung im Raum einnehmen können, kann durch die Rotation der Werkzeugaufnahmen 70,72 um die dritte Achse A3 zusätzlich das Passteil 16 ausgerichtet werden. Dies schafft eine große Anzahl von Freiheitsgraden bei der Bewegung des Pressteils 16. Ferner kann die Werkzeugaufhängung 42 die in Fig. 4 gezeigte flache Stellung einnehmen, in welcher alle drei Achsen A1, A2 und A3 in einer gemeinsamen horizontalen Ebene liegen und die stabförmigen Werkzeugaufnahmen 70,72 durch Drehen um die dritte Achse A3 so ausgerichtet sind, dass das Pressteil 16 ebenfalls horizontal liegt. In dieser Stellung läßt sich das Pressteil 16 auch in einen Zwischenraum zwischen den Werkzeughälften einer Presse 10,12 einführen, der relativ niedrig bemessen ist.

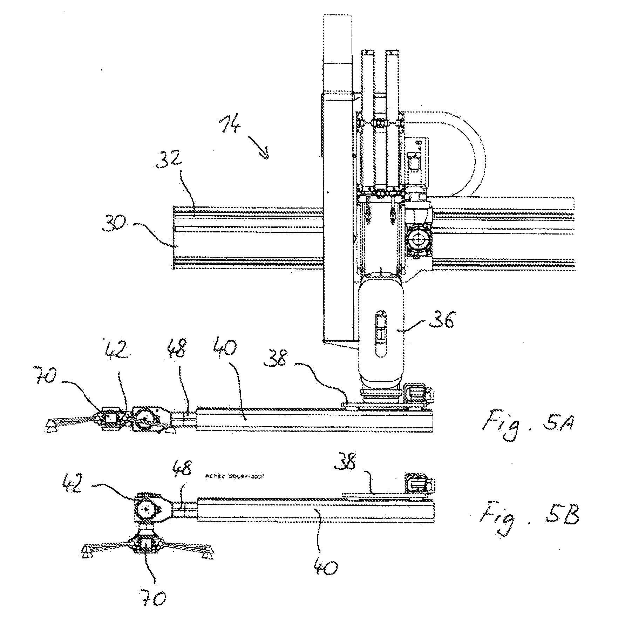

Aus dieser Stellung läßt sich die Werkzeugaufhängung 42 in eine Stellung überführen, wie sie beispielsweise in Fig. 5B gezeigt ist. Die Fig. 5A und 5B repräsentieren Seitenansichten der vorliegenden Ausführungsform des erfindungsgemäßen Roboters in zwei verschiedenen Stellungen der Werkzeugaufhängung 42, nämlich die bereits im Zusammenhang mit Fig. 2 gezeigte Stellung gemäß Fig. 5A und die Stellung gemäß Fig. 5B entsprechend den Fig. 1 und 3.

Wird aus der Stellung in Fig. 5A, in der die zweite Achse A2 horizontal liegt, die Werkzeugaufhängung 42 um die erste Achse A1 geschwenkt, so dass die zweite Achse A2 senkrecht steht, wird die Stellung gemäß Fig. 5B erreicht. Es ist deutlich erkennbar, dass in der Stellung der Fig. 5B die Werkzeugaufhängung 42 eine wesentlich größere Bauhöhe aufweist, als in der vorhergehenden Stellung gemäß Fig. 5A. Daher ist die flache Stellung aus Fig. 5A bevorzugt dazu geeignet, ein Pressteil 16 in eine Presse 10,12 einzuführen oder aus dieser zu entnehmen. Bei der Überführung von der Position aus Fig. 5A in die Position aus Fig. 5B kann die horizontale Lage des Pressteils 16 beibehalten werden, und zwar dank der Drehbarkeit der stabförmigen Werkzeugaufnahmen 70,72 um die dritte Achse A3, die die Rotation um die erste Achse A1 kompensiert. Die dritte Achse A3 als Stabachse der Werkzeugaufnahmen 70,72 wird hierbei um die horizontale erste Achse A1 achsparallel verschwenkt.

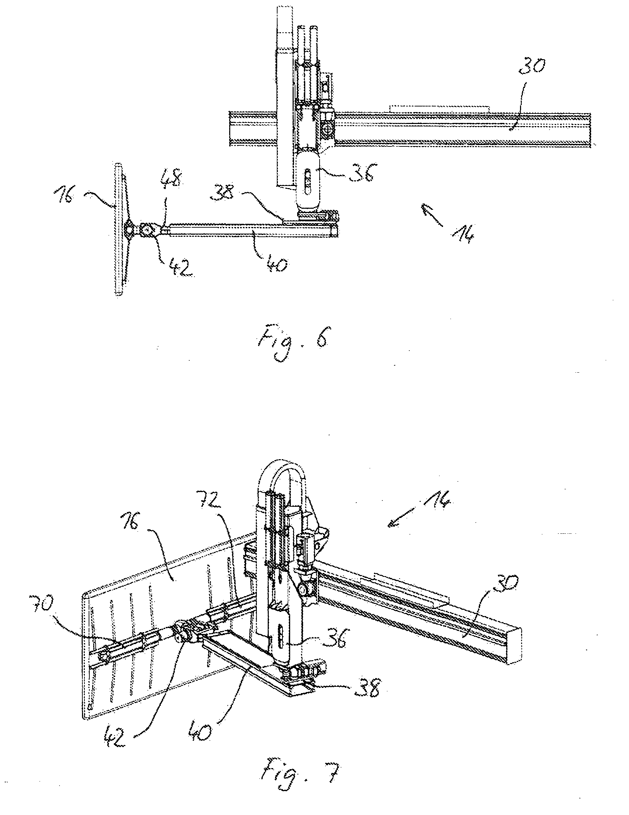

Die erfindungsgemäße Achskonstruktion der Werkzeugaufhängung 42 bietet noch weitere Anwendungsmöglichkeiten. Fig. 6 zeigt eine Situation, in welcher die zweite Achse A2 in der horizontalen Ebene liegt und in der die Werkzeugaufnahmen 70,72 um ihre Stabachsen, nämlich die dritte Achse A3, derart gedreht sind, dass das Pressteil 16 senkrecht steht. Eine solche Stellung kann in Fällen nützlich sein, in welchen das Pressteil 16 aus einer senkrechten Stellung angenommen oder in diese abgelegt werden muß. Während der Überführung von einer Position in die andere kann das Pressteil 16 naturgemäß nahezu jede mögliche Stellung einnehmen, in Abhängigkeit von den räumlichen Gegegebenheiten zwischen den Pressenstationen.

Die Situation aus Fig. 6 ist auch in Fig. 7 nochmals perspektiv dargestellt. Deutlich ist zu erkennen, dass die stabförmigen Werkzeugaufnahmen 70, 72 gegenüber der Stellung aus Fig. 4 eine um 90° gedrehte Stellung am Zapfen 68 der Werkzeugaufhängung 42 einnehmen, so dass die senkrechte Stellung des Pressteils 16 erreicht wird.

## Patentansprüche

1. Roboter (14) mit einem Bewengunsgmechanismus zum Umsetzen von Pressteilen, insbesondere zwischen zwei aufeinanderfolgenden Pressen (10,12) einer Pressenstraße, die die Durchführung von dreidimensionalen Bewegungen auf dem Weg zwischen den Pressen (10,12) gestattet, wobei an dem Bewegungsmechanismus ein horizontaler Zusatzarm (40) angebracht ist, der mit dem Bewegungsmechanismus über einen Träger (38) verbunden ist, der eine senkrechte Achse aufweist und der eine Schwenkung des Zusatzarms (40) um diese senkrechte Achse des Trägers (38) sowie eine horizontale Längsverschiebung des Zusatzarms (40) in Bezug auf den Träger (38) gestattet, wobei am äußeren Ende des Zusatzarmes (40) eine Werkzeugaufhängung (42) vorgesehen ist, die um eine horizontale erste Achse (A1) und um eine zweite Achse (A2) schwenkbar ist, die zur ersten Achse (A1) senkrecht steht,
wobei die Werkzeugaufhängung (42) eine Werkzeugaufnahme (70,72) umfasst, die
um eine dritte Achse (A3) senkrecht zur zweiten Achse (A2) drehbar ist, und wobei sich die erste Achse (A1), die zweite Achse (A2) und die dritte Achse (A3) in eine gemeinsame horizontale Ebene bringen lassen.

2. Roboter nach Anspruch 1, **dadurch gekennzeichnet, dass** die Werkzeugaufhängung (42) in einem Schwenklager (58) zur Drehung um die zweite Achse (A2) gelagert ist, welches Schwenklager (58) um die erste Achse (A1) schwenkbar am Ende des Zusatzarmes (40) gehalten wird.

3. Roboter nach Anspruch 1 oder 2, **dadurch gekennzeichnet, dass** die Werkzeugaufnahme (70,72) als stabförmiger Halter ausgebildet ist, dessen Stabachse die dritte Achse (A3) bildet.

4. Roboter nach einem der vorhergehenden Ansprüche, **dadurch gekennzeichnet, dass** das Ende des Zusatzarms (40) ein Gelenkstück (48) umfasst, das um eine senkrechte Achse (A0) schwenkbar am Zusatzarm (40) angebracht ist und an dessen Ende die dritte Achse (A3) gelagert ist.

5. Roboter nach Anspruch 4 in Verbindung mit Anspruch 2 oder 3, **dadurch gekennzeichnet, dass** das Gelenkstück (48) gabelförmig ausgebildet ist und das Schwenklager (58) beidseitig umgreift.

6. Roboter nach einem der Ansprüche 1 bis 5, **dadurch gekennzeichnet, dass** der Bewegungsmechanismus einen horizontalen Längsträger (30) umfasst, an welchem der Träger (38) entlang der Länge des Längsträgers (30) und in vertikaler Richtung verfahrbar gehalten wird.

7. Roboter nach einem der Ansprüche 1 bis 5, **dadurch gekennzeichnet, dass** der Bewegungsmechanismus einen um eine senkrechte Achse schwenkbaren mehrteiligen und einknickbaren Arm aufweist und dass der Träger am Ende dieses Armes angebracht ist.

8. Roboter nach einem der vorhergehenden Ansprüche, **dadurch gekennzeichnet, dass** zur Durchführung der Schwenkung um die erste Achse (A1), die zweite Achse (A2) und/oder die dritte Achse (A3) einer oder mehrere Motoren vorgesehen sind.

## Claims

1. Manipulator (14) comprising a movement mechanism for transporting workpieces, especially between two subsequent molding presses (10,12) of a press working line, allowing three dimensional movements on the path between the molding presses (10,12), wherein a supplemental arm (40) is attached to the moving mechanism, said supplemental arm (40) being connected to the moving mechanism via a support member (38) comprising a vertical axis and allowing a swiveling movement of the supplemental arm (40) around said vertical axis of the support member (38) as well as a translation movement of the supplemental arm (40) with respect to the support member (38), wherein a tool support (42) is provided at the outer end of the supplemental arm (40) being rotatable around a horizontal first axis (A1) and around a second axis (A2) perpendicular to the first axis (A1), and said tool support (42) comprising a tool reception (70,72) that is rotatable around a third axis (A3) perpendicular with respect to the second axis (A2), wherein the first axis (A1), the second axis (A2) and the third axis (A3) can be brought into a common horizontal plane.

2. Manipulator according to claim 1, **characterized in that** said tool support (42) is received within a rotation support (58) for rotating around the second axis (A2), said rotation support (58) being held pivotable around the first axis (A1) at the end of the supplemental arm (40).

3. Manipulator according to one of claims 1 or 2, **characterized in that** said tool reception (70,72) is provided as a bar-shaped holder with its bar axis representing a third axis (A3).

4. Manipulator according to one of the preceding claims, **characterized in that** the end of the supplemental arm (40) comprising an articulated joint member (48) provided at the supplemental arm (40) pivotable around a vertical axis (A0), while the third axis (A3) is supported at the end of the articulated joint member (48).

5. Manipulator according to claim 4 in connection with one of claims 2 or 3, **characterized in that** said articulated joint member (48) is fork-shaped and receives the rotation support (58) from both sides.

6. Manipulator according to one of claims 1 to 5, **characterized in that** said movement mechanism comprises a horizontal beam (30) at which the support member (38) is held moveable along the length of the beam (30) and moveable in a vertical direction.

7. Manipulator according to one of claims 1 to 5, **characterized in that** the movement mechanism comprises a foldable arm with a plurality of limbs that can be rotated around a vertical axis, wherein said support member is provided at the end of this arm.

8. Manipulator according to one of the preceding claims, **characterized in that** one or more motors are provided for pivoting around the first axis (A1), the second axis (A2) and/or around the third axis (A3).

## Revendications

1. Robot (14) muni d'un mécanisme de déplacement pour déplacer des pièces embouties à la presse, en particulier entre deux presses consécutives (10, 12) d'un train de presses, qui permet l'exécution de mouvements tridimensionnels sur le trajet entre les presses (10, 12), dans lequel un bras supplémentaire horizontal (40) est monté sur le mécanisme de déplacement, lequel bras supplémentaire est relié au mécanisme de déplacement par l'intermédiaire d'un organe de support (38) comportant un axe vertical et permettant un pivotement du bras supplémentaire (40) autour de cet axe vertical de l'organe de support (38) ainsi qu'un déplacement longitudinal horizontal du bras supplémentaire (40) par rapport à l'organe de support (38), dans lequel une suspension d'outil (42) est prévue sur l'extrémité extérieure du bras supplémentaire (40), laquelle suspension d'outil peut pivoter autour d'un premier axe horizontal (A1) et autour d'un deuxième axe (A2) perpendiculaire au premier axe (A1), dans lequel la suspension d'outil (42) inclut un récepteur d'outil (70, 72) qui peut tourner autour d'un troisième axe (A3) perpendiculaire au deuxième axe (A2), et dans lequel le premier axe (A1), le deuxième axe (A2) et le troisième axe (A3) peuvent être amenés dans un plan horizontal commun.

2. Robot selon la revendication 1, **caractérisé en ce que** la suspension d'outil (42) est montée dans un palier pivotant (58) pour tourner autour du deuxième axe (A2), lequel palier pivotant (58) est maintenu de manière à pouvoir pivoter autour du premier axe (A1) à l'extrémité du bras supplémentaire (40).

3. Robot selon la revendication 1 ou 2, **caractérisé en ce que** le récepteur d'outil (70, 72) est configuré sous la forme d'un support en forme de barre, l'axe de barre formant le troisième axe (A3).

4. Robot selon l'une des revendications précédentes, **caractérisé en ce que** l'extrémité du bras supplémentaire (40) inclut une pièce articulée (48) qui est montée sur le bras supplémentaire (40) de manière à pouvoir pivoter autour d'un axe vertical (A0) et sur l'extrémité duquel est supporté le troisième axe (A3).

5. Robot selon la revendication 4 en liaison avec la revendication 2 ou 3, **caractérisé en ce que** la pièce articulée (48) est configurée sous la forme d'une fourchette et dont les deux côtés sont entourés par le palier pivotant (58).

6. Robot selon l'une des revendications 1 à 5, **caractérisé en ce que** le mécanisme de déplacement inclut un support longitudinal horizontal (30) sur lequel l'organe de support (38) est maintenu mobile le long de la longueur du support longitudinal (30) et dans la direction verticale.

7. Robot selon l'une des revendications 1 à 5, **caractérisé en ce que** le mécanisme de déplacement comporte un bras pliable et en plusieurs parties, pouvant pivoter autour d'un axe vertical, et **en ce que** l'organe de support est monté à l'extrémité de ce bras.

8. Robot selon l'une des revendications précédentes, **caractérisé en ce qu'**un ou plusieurs moteurs sont prévus pour exécuter le pivotement autour du premier axe (A1), du deuxième axe (A2) et/ou du troisième axe (A3).
